# EUROPEAN PATENT SPECIFICATION

(11) **EP 2 037 763 B1**
(45) Date of publication and mention of the grant of the patent: **11.04.2012**
(21) Application number: 07733875.4
(22) Date of filing: 29.06.2007
(51) Int. Cl.: A23L 1/30, A23L 1/304, A23L 1/22

(54) **NOVEL USE OF CAPSAICIN**
NEUE VERWENDUNG VON CAPSAICIN
NOUVELLE UTILISATION DE LA CAPSAÏCINE

(30) Priority: 30.06.2006 HU 0600551
(43) Date of publication of application: 25.03.2009
(73) Proprietor: Lévainé Papp, Szilvia, 6723 Szeged (HU); Papp, Judit, 6721 Szeged (HU)
(72) Inventor: SZOLCSÁNYI, János, H-7624 Pécs (HU); ZOLTAI, Attila, H-6721 Szeged (HU)
(74) Representative: Szentpéteri, Zsolt
(86) International application number: PCT/HU2007/000058
(87) International publication number: WO 2008/001144

(56) References cited:
- EP-A- 1 547 473
- WO-A-2004/089067
- GB-A- 2 289 204
- JP-A- 2002 186 469
- JP-A- 2002 218 950
- JP-A- 2005 130 782
- KR-A- 20040 035 503

## Description

This novel invention concerns a new application of capsaicin found in peppers. More precisely, the invention is based on a system with the help of which capsaicin present in peppers is introduced into foodstuff that is suitable for human consumption, for example water, mineral water, fruit juices, dairy products or wines. The invention also deals with the process that introduces capsaicin into foods, as well as with the capsaicin-containing products produced this way.

Capsaicin and capsaicin-containing preparations are applied in medicine even today. These preparations are used to stimulate appetite or - in the form of ointments - to treat rheumatic diseases, lumbago, chilblain. They have also been included in hair grower and anti-hairfall preparations.

Capsaicin itself is a characteristically spicy, hot substance that strongly irritates the sensory nerve endings in the oral mucosa and the tongue root when it gets in the oral cavity. However, because of its favourable physiological effects, it is advisable to introduce as much low-concentration capsaicin as possible into the organism.

One very important aspect of the invention is that capsaicin, the sensory stimulant responsible for the hotness of peppers, causes an unpleasant burning sensation in the mouth only in high concentrations. In the range of its threshold concentration, it produces a pleasant, warm sensation. One of the most important characteristics of the sensory nerve stimulating effect of capsaicin is that in cold fluids neither burning nor hot sensation occurs; however, if the temperature of the mucosa increases, the characteristic hot or burning sensation soon develops depending on the concentration. By cooling the oral mucosa with water of room temperature, sensory effects can be blocked any time.

The physiological effects of capsaicin are much more diverse. Its effects in connection with ulcers were unclear for a long time and it is widely known that those suffering from ulcers were advised against consuming spicy foods and hot peppers.

It was Szolcsányi and Barthó who first demonstrated in rats that low-concentration capsaicin introduced into the stomach inhibits or totally prevents the development of gastric ulcer and that only sensory nerve ending blockage due to high concentrations leads to the development of more severe ulcers (Szolcsányi, J. and Barthó, L. Adv. Physiol. Sci., 1981, 15: 39-51). Further studies widely supported this gastric ulcer preventing effect of capsaicin (Holzer, P. and Sametz, W. Gastroenterology 1986, 91: 975-981; Evangelista, S., Maggi, C.A., and Meli, A. Proc. Soc. Exp. Biol. Med. 1987, 184: 264-266; Holzer et al. Am. J. Physiol. 1991, 260 G363-370; Maggi, C.A. Prog. Neurobiol. 1995, 45: 1-98; Mózsik, Gy., Abdel-Salam, O.M.E., Szolcsányi, J. Capsaicin-sensitive afferent nerves in gastric mucosal damage and protection Akadémiai Kiadó Budapest 1997; Szolcsányi, J. and Barthó, L. J. Physiol. (Paris) 2001, 95: 181-188).

The reason for this favourable effect is the fact that capsaicin administer orally increases blood perfusion in gastric and intestinal mucosa and stimulates intestinal peristalsis due to vasoactive peptides released from sensory nerve endings. Capsaicin also dilates cutaneous blood vessels, increases heat release and thrombosis-inhibiting effects have been reported as well.

Proving that introducing capsaicin into the stomach of healthy volunteers protects the gastric mucosa and prevents indomethacin-induced gastric bleeding and alcohol-induced mucosal damage was a very significant achievement (Mózsik, Gy., Szolcsányi, J. and Rácz, J., World J. Gastroenterology 2005, 11: 5180-5184).

In animal models capsaicin inhibits the oxidation of low-density lipoproteins (Kempaiah et al, Mol. Cell. Biochem. 2005, 275: 7-13), protects the integrity of red blood cells in rats consuming fatty foods and suffering from hypercholesterolemia (Kempaiah, RK and Srinivasan, K. J. Nutr. Biochem. 2006, 17: 471-478) and prevents the development of hypercholesterolemia (Negulescu, J.A. et al, Artery, 1989, 16: 174-188). In humans the prolonged consumption of hot peppers inhibits the oxidation of serum lipoproteins (Ahuja, K.D. and Ball, M.J. Br. J. Nutr. 2006, 96: 239-242).

In animal models the stimulation of capsaicin-sensitive nerves decreases hypertension, inhibits reperfusion-induced liver damage, endotoxin-induced shock and stress-induced damage to the gastric mucosa (Okajéma, K. and Harado, N. Curr. Med. Chem. 2006, 13: 2241-2251).

Capsaicin stimulates metabolism, decreases lipid uptake and inhibits the development of obesity (Westerterp-Plantenaga, M. et al. Physiol. Behav. 2006, 89: 85-91, Int. J. Obes (Lond) 2005 29: 682-688).

Capsaicin inhibits the proliferation and growth of different malignant cells, including carcinoma cells in the prostate (Mori, A. et al, Cancer Res. 2006, 66: 3222-3229) and in vitro it kills human gastric adenocarcinoma cells (Lo, YC. et al, World J. Gastroenterol. 2005, 11: 6254-7). In vivo we have no data yet concerning either carcinogenic or carcinoprotective effects of long-term capsaicin consumption.

Our invention focuses on a system with the help of which much more pepper-derived capsaicin could be introduced in foodstuff suitable for human consumption (e.g., water, fruit juices, dairy products or wines) than the amount realised with our current technological knowledge.

When talking about the most important properties and advantages of the invention, it is very important to emphasise that we have managed to work out a procedure to introduce capsaicin into watery solutions. It is a very significant result, as no stable capsaicin-containing watery solutions have been available before.

There are many papers nowadays giving information of the various applications of capsaicin or peppers. In what follows, we would like to give a detailed overview of these papers and the essential differences between those solutions and the present invention.

A British Patent NR GB-A-2 289 204 describes capsaicin containing chewing-gums with flavors to reduce smoking and food intake.

A Japanese patent (nr. JP 2000189121) describes a capsaicin-containing drink which has very favourable calorie content and which can increase body temperature. The desired effect is achieved by adding hot spices to the drink. In one presentation of the invention 0.0000015 - 0.0005 mass percent of capsaicin is used as hot spice. One considerable disadvantage of it is that the unpleasant, hot taste cannot be eliminated and apart from the small increase in body temperature other physiological effects cannot be achieved due to the minimal amount of capsaicin.

A Dutch patent (nr. NL 9202104) describes a pepper drink that contains water, pepper juice and/or pepper extract and at least one kind of sweetener. According to the invention, the most favourable form of presentation contains pepper juice and/or pepper purée (made of 3-4 red peppers), a litre of water, three tablespoons of cane sugar and one teaspoon of honey. The invention also includes the procedure of producing the drink. During the procedure pimiento is used as the starting material of pepper juice. Pimiento; however, contains only a negligible amount of capsaicin, so the inventors did not realise the opportunities inherent in the compound or the importance of applying it on its own.

A Japanese patent (nr. JP 2002186469) describes a health-preserving dietetic drink that contains mannan gel, capsaicin, water, jellifying agents, sweeteners and other additives. The resulting drink can decrease the fat content of the body thereby preventing obesity. The inventors; however, could not solve one of the most serious problems in connection with capsaicin, i.e. they could not introduce relatively big amounts of capsaicin into an exclusively watery medium in a way that the resulting solution will be stable.

A Chinese patent (nr. CN 152 0751) describes a Chinese medicine that contains pepper as one of its active agents. The medicine can be used by itself or added to other drinks and it can treat various gastric and intestinal complaints. However, the patent does not realise the increased advantages of applying capsaicin on its own, nor does it solve the stabilisation of capsaicin in a watery medium or the elimination of its hot taste.

A Chinese patent (nr. CN 1337243) describes a carcinoprotective herbal tea that contains pepper as one of its active agents. The procedure of production can be altered so that not only tea, but powder, tablets, capsules wine, beer, syrup, sweets or biscuits can be produced. However, this paper does not describe the essential physiological effects of capsaicin, its application as a sole component or its introduction into a watery medium in a relatively big amount.

A Hungarian patent announcement published on 30 August, 1993. (nr. P9101963) describes a natural colouring and taste agent made of seasoning pepper or pimiento. The extracted starting materials can be used to produce soft and alcoholic drinks, salads and pickles, which can be diluted with water. The paper does not describe capsaicin or its stable watery solutions.

A Hungarian patent (nr. 204984) describes a procedure to produce alcohol-free fruit and vegetable products. However, the document and its claims do not give details on peppers or capsaicin.

A Japanese patent (nr. JP 2001190251) describes a procedure to produce a fermented soft drink. Among several other substances, the soft drink contains sweet pepper as well. However, the patent does not mention capsaicin or its application in watery solutions.

A Japanese patent (nr. JP 2001190252) describes a soft drink that can trigger immune responses and that may contain sweet pepper extract besides several other substances and has no acidic taste. The document does not mention capsaicin, the elimination of its hot effects or its application in watery solutions.

A Russian patent (nr. RU 2160548) describes an alcohol-free hot drink that contains ground red pepper seeds as an additive for taste enhancement. The document does not mention capsaicin or its effects.

A Russian patent (nr. RU 2219233) describes a bitter liqueur. Besides several other substances, the liqueur may contain watery-alcoholic red pepper extract. The document does not mention capsaicin or its applicability.

An American patent (nr. US 2003/0091719 A1) published on 15 May, 2003 describes a healthy soft drink, one ingredient of which may be pepper. However, neither the description nor the claims of the patent mention capsaicin.

As it is obvious from what is said above, so far mostly pepper extracts and pepper drinks have been used to introduce capsaicin into the human body. These products either could not be considered stimulants or they had such a peculiar taste that they were consumed only by a limited group of people. The inventors of this product realised that there was a need for techniques that could eliminate the unpleasant taste of capsaicin, so that this substance with very important physiological effects could be included into fluids that are widely consumed in big amounts such as water, mineral water, dairy products, fruit juices and wines.

As a result, the aim of the invention was to work out a new procedure and products that eliminate the drawbacks of the above mentioned methods. We also intended to introduce capsaicin into new products or increase its amount in older ones without enhancing their unpleasant hot taste.

According to the invention, this aim was achieved by applying a special method to introduce capsaicin into foodstuff. This method includes the use of fulvic acid-chelate complex and L-ascorbic acid besides capsaicin. The chelate complex may contain iron, chromium or selenium cations. The 'system' may also contain other additive substances that enhance taste. For example, in one presentation of the invention we apply menthol to improve taste. Naturally, other taste-enhancing substances could also be used instead of menthol, for example orange oil, lemon, eucalyptus oil with lemon, strawberry aroma or the mixture of these. A special presentation of the invention may contain smoke aroma on its own or combined with other taste enhancers. One significant advantage of the application of smoke aroma is that it decreases nicotine-cravings in the person who consumes the product, so smoke aroma-containing products can be used effectively in facilitating giving up smoking. The amount of the specific substances can be found in the examples and in the claims.

The products produced by the procedure described in the invention have essential physiological effects. We have found that if we apply chromium cations in the chelate complex, we get a product which has a beneficial effect on the carbohydrate metabolism of the body and also on the regulation of glucose homeostasis, which means it can play an important role in the nutrition of diabetic patients.

Another important advantage of the invention is that with the help of the trace elements that can be found in the system which is used to introduce capsaicin we can achieve a very favourable effect on the whole organism as well as increase vitality. A couple of seconds after the consumption of the invented product warmth can be felt, which obviously proves the product's vasodilating effect.

According to the invention, when introducing capsaicin into foods we simply blend the substances and add the appropriate amount of the resulting mixture to the foods.

Appropriate feeding equipment is used to introduce capsaicin into foods, such as water, mineral water, fruit juices, dairy products or wines. Such feeding equipment is well-known for experts and it has been used in the food industry for a long time. It is important to note that capsaicin can only be introduced into dairy products in the form of solution. In such cases the amount of ingredients has to be determined in relation to the average body weight of consumers, in a way the stock solution containing the ingredients has the smallest possible volume that can keep the components in the solution. The body weight of an average adult was understood to be 75 kg, while that of an average child 40 kg. For experts it is obvious that the invented system is capable of being introduced into other foods as well.

The active agents can be produced and marketed in the form of tablets as well. For this purpose the previously mentioned mixture of the active agents is mixed with binders and other excipients used in the process of the tablet production and then pressed with the appropriate pharmaceutical equipment. The tablets are produced in a way that they readily dissolve in the appropriate medium, i.e. water, mineral water, fruit juices thereby releasing the active agents and making them available for the organism of the consumer. The binders, excipients and technological equipment used in the production of tablets are well-known for experts.

### EXAMPLES

We are introducing the invention in more details through the following examples. We would like to point out; however, that these examples are not in any way restrictive regarding our invention.

### Example 1

We produce a system of the following composition that can introduce capsaicin into foods:

| | |
|---|---|
| Capsacinoids | 0.1 - 10 mg/l |
| Iron (II) fulvic acid chelate | 6 - 30 mg/l |
| L - menthol | 1 - 100 mg/l |
| L-ascorbic acid | 1 -100 mg/l |
| Sodium fluoride | 0.7 - 1.2 mg/l |
| Zinc fulvic acid chelate | 3-10 mg/l |

During the production we mix the starting materials present in the form of solid powder with each other, then the resulting mixture is homogenised. The produced mixture can immediately be introduced into foods.

### Example 2

We produce a system of the following composition that can introduce capsaicin into foods:

| | |
|---|---|
| Capsacinoids | 0.1 - 10 mg/l |
| Selenium fulvic acid chelate | 4 - 265 microgram/l |
| L - menthol | 1 -100 mg/l |
| L- ascorbic acid | 1 - 100 mg/l |
| Sodium fluoride | 0.7 -1.2 mg/l |
| Zinc fulvic acid chelate | 3-10 mg/l |

During the production we mix the starting materials present in the form of solid powder with each other, then the resulting mixture is homogenised. The produced mixture can immediately be introduced into foods.

### Example 3

We produce a system of the following composition that can introduce capsaicin into foods:

| | |
|---|---|
| Capsacinoids | 0.1 - 10 mg/l |
| Chromium fulvic acid chelate | 3 - 30 microgram/l |
| L - menthol | 1 -100 mg/l |
| L- ascorbic acid | 1 - 100 mg/l |
| Sodium fluoride | 0.7 - 1.2 mg/l |
| Zinc fulvic acid chelate | 3 - 10 mg/l |

During the production we mix the starting materials present in the form of solid powder with each other, then the resulting mixture is homogenised. The produced mixture can immediately be introduced into foods.

### Example 4

### Producing tablets

From the systems capable of introducing capsaicin into foods and described in Examples 1-3 we produce tablets of 0.5 - 1.5 g by blending the powder-form mixture of active agents with binders and other excipients normally used in tablet production and then forming the appropriate shape with the help of a tabletting machine.

For experts it is obvious that the given weight of the tablet only serves as an example, tablets with a different weight can also be produced. The form of the tablet can also be varied, any generally applied form is acceptable.

### Example 5

### Introducing the system into foods.

We mix 0.1 - 10 mg of capsaicin, 6 - 30 mg of iron (II) fulvic acid-chelate, 1 - 100 mg of L - menthol, 1 - 100 mg of L-ascorbic acid, 0.7 - 1.2 mg of sodium fluoride and 3 -10 mg of zinc fulvic acid chelate in an appropriate dish. The mixture is homogenised then added to 1,000 ml of water, resulting in a solution which is suitable for human consumption.

For experts it is obvious that any form (solution, solid form, powder or tablet) of any invention described in the above examples can be applied to introduce capsaicin into foods and also that the food can be any of the above mentioned ones, with the exception of dairy products, in which case only the solution form can be applied.

## Claims

1. A system for introducing capsaicin into foods, containing the following substances:
| | |
|---|---|
| Capsacinoids | 0.1 - 10 mg/l |
| Iron (II) fulvic acid chelate | 6 - 30 mg/l |
| L - menthol. | 1 - 100 mg/l |
| L- ascorbic acid | 1 - 100 mg/l |
| Sodium fluoride | 0.7 - 1.2 mg/l |
| Zinc fulvic acid chelate | 3 - 10 mg/l |

2. The system of Claim 1, containing the following substances:
| | |
|---|---|
| Capsacinoids | 0.1 - 10 mg/l |
| Selenium fulvic acid chelate | 4 - 265 microgram/l |
| L - menthol | 1 -100 mg/l |
| L- ascorbic acid | 1 -100 mg/l |
| Sodium fluoride | 0.7 -1.2 mg/l |
| Zinc fulvic acid chelate | 3 - 10 mg/l |

3. The system of Claim 1, containing the following substances:
| | |
|---|---|
| Capsacinoids | 0.1 - 10 mg/l |
| Chromium fulvic acid chelate | 3 - 30 microgram/l |
| L - menthol | 1 - 100 mg/l |
| L- ascorbic acid | 1 - 100 mg/l |
| Sodium fluoride | 0.7 - 1.2 mg/l |
| Zinc fulvic acid chelate | 3 - 10 mg/l |

4. A system of any of claims 1-3, **characterised by** containing orange oil, lemon, eucalyptus oil with lemon, strawberry aroma, smoke aroma or the mixture of these instead of menthol.

5. A system of any of claims 1-4, in the form of solution.

6. A system of any of claims 1-4, in the form of tablets.

7. Process for introducing capsaicin into foods, **characterized by** applying any of the systems of claims 1-3.

8. The process of claim 7, wherein the food is water, mineral water, fruit juice, dairy product or wine.

9. The process of Claim 8, wherein the food is dairy product and the system is introduced in the form of solution.

10. Food product prepared according to the process of claim 7.

## Patentansprüche

1. System für die Einführung von Capsaicin in Lebensmittel, wobei das System die folgenden Substanzen enthält:
| | |
|---|---|
| Capsaicinoiden | 0,1 - 10 mg/l |
| Eisen(II) Fulvinsäure Chelate | 6 - 30 mg/l |
| L-Menthol | 1 - 100 mg/l |
| L-Askorbinsäure | 1 - 100 mg/l |
| Natriumfluorid | 0,7 - 1,2 mg/l |
| Zink Fulvinsäure Chelate | 3 - 10 mg/l |

2. System nach Anspruch 1, das die folgenden Substanzen enthält:
| | |
|---|---|
| Capsaicinoiden | 0,1 - 10 mg/l |
| Selenium Fulvinsäure Chelate | 4-265 mikrogramm/l |
| L-Menthol | 1 - 100 mg/l |
| L-Askorbinsäure | 1 - 100 mg/l |
| Natriumfluorid | 0,7 - 1,2 mg/l |
| Zink Fulvinsäure Chelate | 3 - 10 mg/l |

3. System nach Anspruch 1, das die folgenden Substanzen enthält:
| | |
|---|---|
| Capsaicinoiden | 0,1 - 10 mg/l |
| Chrom Fulvinsäure Chelate | 3 - 30 mikrogramm/l |
| L-Menthol | 1 - 100 mg/l |
| L-Askorbinsäure | 1 - 100 mg/l |
| Natriumfluorid | 0,7 - 1,2 mg/l |
| Zink Fulvinsäure Chelate | 3 - 10 mg/l |

4. System nach einem der Ansprüche 1 bis 3 **dadurch gekennzeichnet, dass** es anstatt Menthol Orangenöl, Eucalyptusöl mit Zitrone, Erdbeeraroma, Raucharoma oder deren Mischungen enthält.

5. System nach einem der Ansprüche 1 bis 4, in Form von einer Lösung.

6. System nach einem der Ansprüche 1 bis 4, in Form von Tabletten.

7. Verfahren zur Einführung von Capsaicin in Lebensmittel, **dadurch gekennzeichnet, dass** in dem Verfahren ein System nach einem der Ansprüche 1 bis 3 gebraucht wird.

8. Das Verfahren nach Anspruch 7, wobei das Lebensmittel Wasser, Mineralwasser, Fruchtsaft, Milchprodukt oder Wein ist.

9. Verfahren nach Anspruch 8, wobei das Lebensmittel Milchprodukt ist und das System in Form von einer Lösung eingeführt wird.

10. Lebensmittelprodukt hergestellt durch das Verfahren nach Anspruch 7.

## Revendications

1. Système pour l'introduire de la capsaïcine aux produits alimentaires, dont la composition comprend les substances suivantes:
| | |
|---|---|
| Capsacïnoïdes | 0.1 - 10 mg/l |
| Chélate de fer (II) et de l'acide fulvique | 6 - 30 mg/l |
| L-menthol | 1 - 100 mg/l |
| L-acide ascorbique | 1 - 100 mg/l |
| Fluorure de sodium | 0.7 - 1.2 mg/l |
| Chélate de zinc et de l'acid fulvique | 3 - 10 mg/l. |

2. Système selon la revendication 1, dont la composition comprend les substances suivantes:
| | |
|---|---|
| Capsacïnoïdes | 0.1 - 10 mg/l |
| Chélate de sélénium et de l'acide fulvique | 4 - 265 microgram/l |
| L-menthol | 1 - 100 mg/l |
| L-acide ascorbique | 1 - 100 mg/l |
| Fluorure de sodium | 0.7 - 1.2 mg/l |
| Chélate de zinc et de l'acid fulvique | 3 - 10 mg/l. |

3. Système selon la revendication 1, dont la composition comprend les substances suivantes:
| | |
|---|---|
| Capsacïnoïdes | 0.1 - 10 mg/l |
| Chélate de chrome et de l'acide fulvique | 3 - 30 microgram/l |
| L-menthol | 1 - 100 mg/l |
| L-acide ascorbique | 1 - 100 mg/l |
| Fluorure de sodium | 0.7 - 1.2 mg/l |
| Chélate de zinc et de l'acid fulvique | 3 - 10 mg/l. |

4. Système selon l'une quelconque des revendications **1 à 3, caractérisé en ce que** la composition dudit système comprend de l'huile d'orange, de citron, de l'huile d'eucalyptus avec de citron, d'arôme de fraise, d'arôme fumée ou le mélange des dites au lieu de menthol.

5. Système selon l'une quelconque des revendications **1 à 4,** sous forme de solution.

6. Système selon l'une quelconque des revendications **1 à 4,** sous forme de comprimés.

7. Procédé pour l'introduire de la capsaïcine aux produits alimentaires, **caractérisé par** appliquant un système selon quelconque des revendications **1 à 3.**

8. Procédé selon la revendication **7,** dans lequel le produit alimentaire est de l'eau, de l'eau minérale, de jus de fruit, des produits laitiers ou de vin.

9. Procédé selon la revendication **8,** dans lequel le produit **alimetaire** est un produit laitier et le système est introduit sous forme de solution.

10. Produit alimentaire préparé par un procédé selon la revendication **7.**
